# EUROPEAN PATENT APPLICATION

(11) **EP 4 439 886 A1**
(43) Date of publication of application: **02.10.2024**
(21) Application number: 23165771.9
(22) Date of filing: 31.03.2023
(51) Int. Cl.: H02G 1/10, F16L 1/12, H02G 9/00

(54) **UNDERWATER ELECTRICAL CONNECTION ARRANGEMENT FOR A FLOATING OFFSHORE STRUCTURE, FLOATING OFFSHORE STRUCTURE AND METHOD FOR INSTALLATION OF AN UNDERWATER ELECTRICAL CONNECTION ARRANGEMENT TO A FLOATING OFFSHORE STRUCTURE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

An aspect of the present invention relates to an underwater electrical connection arrangement (3) for a floating offshore structure (100), in particular for a floating wind turbine (1), comprising at least one electrical cable (32) and a water tight cladding tube (31) in that the electrical cable (32) is received, so that a cavity (33) remains inside the cladding tube (31). The cladding tube (31) is designated to be fixed to the floating offshore structure (100) and to follow a trajectory from the floating offshore structure (100) towards a seabed (5). The cladding tube (31) is designated to be at least partially immersed in water, in particular sea water, in an intended state of use of the underwater electrical connection arrangement (3). The cavity (33) is at least partly filled with a first medium (34) having a lower density than the water, in particular sea water, in that the cladding tube (31) is immersed in the intended state of use, so that, in the intended state of use, an at least local uplift force is created.

The underwater electrical connection arrangement is more robust, cheaper and easier to install than current underwater electrical connection arrangements.

## Description

The present invention relates to an underwater electrical connection arrangement for a floating offshore structure, in particular for a floating wind turbine. The invention further relates to a floating offshore structure, in a particular floating wind turbine, and to a method for installation of an underwater electrical connection arrangement to a floating offshore structure.

With the progressing expansion of offshore wind energy production capacity, wind farms comprising a multitude of wind turbines are being installed in more and more remote offshore regions with relatively large water depths. Each wind turbine of a wind farm is mounted on a foundation that is able to carry the weight of the wind turbine and withstand the forces occurring during operation while keeping the wind turbine at its designated position within the wind farm.

While coastal and/or near coast offshore wind farms use conventional support structures fixed to the seabed, for example gravity foundations, monopole foundations, tripod foundations or jacket foundations, remote offshore applications require floating foundations for the wind turbines as conventional foundations are no longer technically and/or economically viable at water depths beyond approximately 40 m. Typical floating foundations, for example spar type, tension leg platform (TLP) type or jacket type foundations, include at least one buoyancy body and can be fully or partly submerged below sea level.

While conventional foundations are stationary with respect to the seabed, floating foundations are only secured to the seabed by means of a mooring system comprising one more mooring lines so that they - to a certain extent - follow the motion of the swells and waves of the surrounding sea.

Each wind turbine is connected by means of a cable link comprising one or more electrical cables, e.g. power cables and communication cables, to neighboring wind turbines and/or other offshore facilities, for example an electrical switchgear, a substation, a collector unit and/or a compensation unit , and/or an onshore station.

From the floating foundation, respectively from the wind turbine mounted thereon, the cable link is commonly suspended from a platform usually referred to as a "transition piece" at the base of the wind turbine tower and extends below the sea level towards to the seabed where it typically rests. As the water depths in areas in that wind farms with floating foundations are to be installed can reach several hundred meters or even 1000 m the cable length between the suspension point at the transition piece and the seabed is significant.

For a simplified installation and/or to provide additional protection to the cables of the cable link the cables may be housed in tubes in an installed position. This is for example described in EP 3086424 A1 that discloses a method for offshore installing of power cables for wind turbines, wherein the power cables are installed by use of empty tubes between several offshore positions, e.g. between wind turbine foundations. Initially, an empty tube is laid in a trench formed in the seabed and then the empty tube is cut at or near the offshore positions. Afterwards the power cables are inserted into the empty tubes.

During operation under harsh maritime conditions the cable link is under the influence of high loads and has to compensate the allowed movement of the floating foundation, e.g. 50 m in each direction. A major portion of the load on the cable link, especially in deep waters, is due to the dead weight of the electrical cable that can reach up to 100 kg per meter for a typical dynamic double steel reinforced cable with a conductor cross section of 3 x 800mm². In addition, the sea's currents account for additional load. While the floating foundation itself may be virtually static due to the mooring system, the sea's currents at different depths can impose significant loads on the cable link even though the depth at which it is deployed from the foundation is below the influence of the waves.

Due to the mentioned loads, the cables used in offshore wind farms based on floating foundations are typically of the so called "dynamic" type which have higher performance specifications and are heavier and more expensive than "static" cables for shallow-water wind farms based on conventional foundations.

A known approach to reduce load on the cable link is to provide an intermediate suspension to the cable link by means of controlled buoyancy. This controlled buoyancy is typically achieved by attaching one or more buoyancy bodies to the cable link so that it floats under water and does not sink to the seabed in the region of the intermediate suspension. The intermediate suspension may be designed in such way that the cable link provides an excess length that allows for the compensation of the allowed movement of the floating foundation. While this solution may effectively reduce the load on the cable it still requires cables of the more expensive dynamic type and the installation process is complex.

It is one object of the present invention to provide an underwater electrical connection arrangement for a floating offshore structure, in particular for a floating wind turbine, that is more robust, cheaper and easier to install than current underwater electrical connection arrangements.

It is a further object of the invention to provide a floating offshore structure, in particular a floating wind turbine, that has an improved underwater electrical connection arrangement.

It is yet a further object of the invention to provide an improved method for installation of an underwater electrical connection arrangement to a floating offshore structure.

According to a first aspect of the invention an underwater electrical connection arrangement for a floating offshore structure, in particular for a floating wind turbine, is proposed. The underwater electrical connection arrangement comprises at least one electrical cable and a water tight cladding tube in that the electrical cable is received. The cladding tube is designated to be fixed to the floating offshore structure and to follow a trajectory from the floating offshore structure towards a seabed. An inner cross section of the cladding tube is larger than an outer cross section of the electrical cable so that at least one cavity remains inside the cladding tube. The cladding tube is designated to be at least partially immersed in water, in particular sea water, in an intended state of use of the underwater electrical connection arrangement. The cavity is at least partly filled with a first medium having a lower density than the water, in particular sea water, in that the cladding tube is immersed in the intended state of use, so that, in the intended state of use, an at least local uplift force is created.

The first medium may be provided along a first longitudinal section of the cavity. In embodiments other longitudinal sections of the cavity might be filled with a different medium or the cavity might be completely filled with the first medium, which will result in a maximum of uplift.

Generally speaking, the invention relates to a "cable in tube system" that creates its own uplift/buoyancy without the need for separate, in particular external, buoyancy bodies attached to the cable. This significantly simplifies the installation at a floating offshore structure and renders the underwater electrical connection arrangement more robust as unintended loss of buoyancy bodies is effectively avoided. The underwater electrical connection arrangement according to the invention advantageously allows for an easy control of the desired uplift simply by controlling the amount of first medium that is provided to the cavity: The more first media, the longer the axial extension of the first longitudinal section, the higher the uplift forces.

By providing the first medium to the cavity it is possible to adjust a volume average mean density of the cladding tube/electrical cable assembly in such way that the mean density is lower than the density of the surrounding sea water in the intended state of use. Alternatively, the volume average mean density of the cladding tube/electrical cable assembly may be adjusted in such way that the mean density equals the density of the surrounding sea water in the intended state of use.

A further advantage of the present invention is that a separate cable protection system (CPS) might become obsolete as the cladding tube that is fixed to the floating foundation directly or indirectly in the intended state of use can take over the functionality of a conventional cable protection system.

The at least one electrical cable can be a power cable or communication cable. In embodiments more than one cable can be provided within the cladding tube. The underwater electrical connection arrangement may especially be provided in a state in that the cladding tube is at least partly immersed in water, in particular sea water. The cladding tube can comprise a plastic material and forms a hollow structure with a distinct longitudinal extension. The electrical cable equally has a distinct longitudinal extension. The cavity can in particular have an annular cross-section. An outer diameter of the cladding tube can in particular range from 250 mm to 500 mm, in particular from 300 mm to 400 mm. An inner diameter of the cladding tube can in particular range from 200 mm to 480 mm. A wall thickness of the cladding tube can range from 10 mm to 100 mm. The electrical cable can have an outer diameter in a range of 100 mm to 400 mm, in particular in a range of 150 mm to 300 mm.

In embodiments the cross sectional area of the electrical cable can range between 50 % and 85 % of an inner cross sectional area of the cladding tube, in particular between 65 % and 80 %.

In embodiments the electrical cable can be mechanically fixed to the cladding tube so that a relative longitudinal movement may be inhibited. Such a mechanical fixation can be provided, for example, by at least one force fit connection means arranged inside the cavity, in particular in the annular space between the electrical cable and the cladding tube.

According to an advantageous embodiment the electrical cable may comprise a dynamic portion and a static portion, wherein the dynamic portion is connected, in particular spliced, to the static portion. Further advantageous, a section of the cable that is close to the floating foundation in the intended state of use may be of the dynamic type and/or a section of the electrical cable remote from the floating foundation in the intended state of use may be of the static type. The connection, in particular splicing, between the dynamic section and static section of the electrical cable can in particular be provided within the cladding tube. This has the advantage that the relatively expensive dynamic type cable is only used in regions in that it is technically required (high load, significant movement) whereas in regions in that the loads on the cable are lower and/or less movement is to be compensated a relatively cheaper static type cable can be used.

The skilled person in the field of offshore electrical connections is aware of the differences between the two cable types. Herein, under an electrical cable of the dynamic type in particular an electrical cable is understood that is designed to withstand periodic movement and bending over long periods of time, for example for 25 years or more, without eventually breaking while under an electric cable of the static type in particular a cable is understood that is only bendable to a certain extend and can't be bent repeatedly without eventually breaking.

According to a further embodiment the cavity may be at least partly filled with a second medium having a different density than the first medium. In particular the second medium may have a higher density than the water, in particular sea water, in that the cladding tube is immersed in the intended state of use, so that, in the intended state of use, a local downforce is created.

The second medium may especially have a higher density than the first medium. The second medium may additionally or alternatively be not mixable with the first medium. Further additionally or alternatively, the second medium may be provided in a different physical state than the first medium. By providing a second medium with a relatively higher density to the cavity a local downforce can be created that allows to adjust the shape of the trajectory the cladding tube describes below the sea level to a wide extent. The second medium may be provided along a second longitudinal section of the cavity. Thereby it is possible, for example, to create a local minimum of the trajectory and/or to ensure that the cable reliably rests on the seabed.

According to yet a further embodiment the cavity may be at least partly filled with a third medium having a different density than the first medium and the second medium. In particular the third medium may be water, in particular sea water. The water forming the third medium may especially have the same density as the water, in particular sea water, in that the cladding tube is immersed at least partly in the intended state of use. The third medium may be provided along a third longitudinal section of the cavity. The density of the third medium may especially be higher than the density of the first medium and lower than the density of the second medium. The provision of a third medium within the cavity allows for an even more precise control of a designed uplift. The first, second and third medium may be fluidically separated from each other, which, for example, can be achieved by providing media in different physical states. In an exemplary embodiment the first medium can be gaseous, the second medium solid and the third medium liquid.

In embodiments the cladding tube may be provided with at least one valve that in particular can be installed in a wall of the cladding tube and allows for a fluidic access to the cavity from external. By means of the valve it is possible to adjust the amount of the media, for example of the first medium, provided in respective longitudinal sections of the cavity. The at least one valve may be accessible in the intended state of use below the sea level with an underwater vehicle, especially a remotely operated underwater vehicle (ROV), , wherein the ROV can be in particular operated from a vessel with a dynamic positioning system, e.g. a DP2 or DP3 system.

It is also possible that the cladding tube is provided with more than one valve, wherein the valves may be arranged with a predetermined spacing along the longitudinal direction from one another. There can be multiple valves assigned to a respective longitudinal section of the cavity and/or at least one valve per longitudinal section.

According to yet a further embodiment the first medium may comprise a gas, in particular an inflammable gas, in particular air, nitrogen, carbon dioxide, a noble gas or a mixture thereof. Alternatively, the first medium may comprise a liquid, in particular an environmentally neutral liquid, in particular water with a lower density than the water, in particular sea water, in that the cladding tube is at least partly immersed in the intended state of use, an oil, in particular fish oil, sunflower oil, rapeseed oil, an alcohol, in particular glycol, or a mixture thereof. Alternatively, the first medium may comprise a solid, in particular a foam, in particular a closed cell foam. The closed cell foam can in particular be made of a polyethylene or other polyolefines.

In case the first medium is water and the underwater electrical connection arrangement is to be immersed in seawater/saltwater the water forming the first medium may be for example normal drinking water or, more general, water with a lower salinity than the surrounding sea water.

According to another embodiment the second medium may comprise a solid, in particular grout, in particular dynamic grout, clay, concrete, ceramics or a mixture thereof. Alternatively, the second medium may comprise a liquid, in particular an environmentally neutral liquid, in particular water with a higher density than the water, in particular sea water, in that the cladding tube is at least partly immersed in the intended state of use, or a liquid metal, in particular mercury, glycerin, or a mixture thereof.

"Dynamic grout" in particular means a type of grout that does not completely harden but remains deformable, in particular bendable, without breaking. Further advantageous, dynamic grout may be dissolvable with water which facilitates the disassembly of the underwater electrical connection arrangement.

In case the second medium is water and the underwater electrical connection arrangement is to be immersed in seawater/saltwater the water forming the second medium may be for example water with a higher salinity than the surrounding sea water. As salt is well soluble in water a density up to 20% higher than that of drinking water can be achieved, whereas the density of typical sea water is only around 3% higher than that of drinking water.

"Environmentally neutral liquid" in particular means a liquid that is not poisonous, preferably not harmful, to the flora and/or fauna neighboring the installation position of the underwater electrical connection arrangement, preferably considering both underwater and above water life.

According to a yet further embodiment the underwater electrical connection arrangement according to the invention may comprise at least one sealing plug arranged in the cavity, wherein the sealing plug seals an annular space between the outer cross section of the electrical cable and the inner cross section of the cladding tube. The at least one sealing plug fluid-tightly separates the cavity into a first portion and a second portion, wherein the first and second portions are filled with different media.

In embodiments there may be more than one sealing plug provided in the cavity. For example it is possible that each longitudinal section of the cavity filled with a different medium than a neighboring one is closed off by means of an individual sealing plug. The sealing plugs may be in particular installed with a predetermined axial spacing, wherein the installation positions of the sealing plugs correspond to a location of the boundaries of the respective longitudinal sections of the cavity filled with different media.

The sealing plug(s) may especially be made from a plastic material, in particular rubber or certain thermoplastic elastomers. Therein it is important to consider the required mechanical and chemical stability over a long period of time, typically 25 years, so that the long-term sealing function of the sealing plug can be ensured. The sealing plug may have a hollow cylindrical shape wherein an outer cross section corresponds with an inner cross section of the cladding tube and an inner cross section corresponds with an outer diameter of the electrical cable. The sealing plug may be provided with an oversize to achieve sufficient sealing preload.

According to a still further embodiment the trajectory may comprise at least one riser portion extending with a vertical component, wherein in particular in the riser portion the cavity is at least partly filled with the first and/or the second medium.

In embodiments a lower portion of the cavity in the riser portion with respect to the direction of gravity may be filled with the second medium to create a defined downforce and an upper portion may be filled with the first medium to create uplift/buoyancy. Additionally, the cavity may also be at least partly filled with the third medium in the riser portion, wherein it is in particular possible that the third medium fills a longitudinal section of the cavity in the riser portion that is located between the upper and lower portion.

The riser portion of the trajectory may be in particular a portion in that the cladding tube extends from the seabed towards the surface in the intended state of use.

According to embodiments the second medium may be provided in a portion of the cavity that corresponds to a local minimum of the trajectory with respect to the direction of gravity in the intended state of use. It may also be possible that the second medium is provided in a portion of the cavity that corresponds to a global minimum of the trajectory with respect to the direction of gravity, e.g. at the seabed.

By providing the second medium with a relatively high density to the cavity the cladding tube/electrical cable assembly is subject to a local downforce that shapes the trajectory in a way that it is drawn towards the seabed. Longitudinally alternating portions of the cavity may be filled with different media so that a final shape of the trajectory can be influenced to a large extent.

Alternatively or additionally the trajectory may comprise an intermediate portion extending with a horizontal component, wherein in particular the intermediate portion is at least partly filled with the first medium. In the intended state of use the intermediate portion may float below the sea level, wherein its main extension may run essentially parallel to the seabed.

In the intended state of use the intermediate portion may be provided at a certain position below the sea level, for example half way down to the seabed. In the intermediate portion a high volume of relatively low density medium is accumulated in the cavity which helps to create significant uplift. A volume average mean density of the cladding tube/electrical cable assembly may be adjusted in the intermediate portion by the amount of first medium provided in the cavity so that the mean density may equal the density of the surrounding sea water or may be lower.

In the intermediate portion the trajectory may in particular extend essentially parallel to the seabed and/or horizontally but may also comprise an acute angle, e.g. 2-15°, against a horizontal plane and/or against the seabed in the intended state of use.

According to a further embodiment the trajectory may comprise a compensation portion having a first bend in that the cladding tube is bent with respect to the riser portion, wherein in particular the cavity along the first bend is filled with the first or the second medium.

The first bend may in particular be bent towards the seabed in the intended state of use. The riser portion may be in particular a portion in that the cladding tube extends from the seabed towards the surface. The first bend may define a local maximum of the trajectory, wherein the first medium helps to create and keep this local maximum stable when immersed in sea water in the intended state of use. The bending angle of the first bend may be between 30 and 100°, in particular around 90°.

Additionally, the compensation portion may comprise a second bend neighboring the first bend, wherein the second bend has a different bending direction than the first bend, wherein in particular the cavity along the second bend is filled with a different medium than along the first bend.

The second bend may in particular be bent away from the seabed in the intended state of use. The second bend may define a local minimum of the trajectory, wherein the second medium helps to create and keep this local minimum stable when immersed in sea water in the intended state of use. The bending angle of the second bend may be between 30 and 100°, in particular around 90°.

In addition it is possible that the trajectory comprises a straight section between the two bends of the compensation portion that connects the first with the second bend. Said straight section may in particular extend with a vertical component, in particular essentially vertically, with respect to the direction of gravity in the intended state of use.

A bending radius of the first and/or second bend may range between 3 to 8 m, in particular around 5 m.

Furthermore, the compensation portion may have a lying S-shape with respect to the direction of gravity in the intended state of use, wherein the lying S-shape is in particular formed by the first bend and the second bend.

In other words, a combination of the first and second bend of the trajectory that neighbor each other creates the lying S-shape of the compensation portion. A vertical extension of the lying S-shape of the compensation portion may range from 15 to 25 m. The first and/or second bend, in particular the lying S-shape of the compensation portion, provide an excess length of the cladding tube/electrical cable assembly that allows the floating foundation to that the cladding tube is fixable to freely move along with the sea's currents and, for example, may provide a range of motion of up to 50m in each direction. An additional beneficial effect of said excess length is that repairs of broken cables are facilitated.

The compensation portion may, in embodiments, comprise more than one lying 'S' so that the range of motion can be further increased.

According to a second aspect of the invention a floating offshore structure, in particular a floating wind turbine, a floating electrical switchgear or a floating drilling rig, is provided. The floating offshore structure comprises at least one buoyancy body and at least one electrical device directly or indirectly attached to the buoyancy body, wherein the electrical device is connected to an underwater electrical connection arrangement according to the invention and wherein the cladding tube of the underwater electrical connection arrangement is directly or indirectly fixed to the buoyancy body.

The buoyancy body may in particular carry a workload platform on that offshore systems, for example a wind turbine tower, can be installed. At the base of the wind turbine tower the workload platform may comprise a transition piece from that the cladding tube can be suspended to extend therefrom down towards the seabed.

The buoyancy body may in particular be part of a floating foundation that can be, for example, of the spar type, tension leg platform (TLP) type or jacket type.

According to a third aspect of the invention a method for installation of an underwater electrical connection arrangement to a floating offshore structure, in particular a floating wind turbine, a floating electrical switchgear or a floating drilling rig, is proposed. The underwater electrical connection arrangement is an underwater electrical connection arrangement according to the first aspect of the invention.

The method comprises the following steps:
a) fixing the cladding tube directly or indirectly to a buoyancy body of the floating offshore structure,
b) at least partly immersing the cladding tube in water, in particular sea water, so that it follows a trajectory from the floating offshore structure towards a seabed,
c) inserting the electrical cable to the cladding tube,
d) filling the cavity at least partly with a first medium having a lower density than the water, in particular sea water, in that the cladding tube is immersed, so that an at least local uplift force is created.

The method steps may be executed according to the alphabetical order or with a different order.

The cavity may be filled with the water, in particular sea water, in that the cladding tube is immersed prior to step d) so that by filling the cavity at least partly with the first medium at least a fraction of the water in the cavity is replaced by the first medium in step d).

The filling of the cavity with the first medium may be done from the floating offshore structure, for example by use of a pump unit and/or a compressor that is used to feed the first medium into the cavity. In case air is used as first medium it can be drawn from the surrounding atmosphere with low effort. In case the first medium is water with a lower salinity than the surrounding sea water, it may be possible to desalinate sea water for this purpose. According to another non limiting example the first medium may be filled into the cavity by means of an underwater vehicle, for example a ROV.

According to another embodiment the method may comprise step e) filling the cavity at least partly with a second medium having a different density than the first medium, wherein in particular the second medium has a higher density than the water, in particular sea water, in that the cladding tube is immersed, so that, a local downforce is created.

Step e) may be in particular executed after step d) but may alternatively as well be executed before step d). Depending on the designed uplift/downforce properties of the underwater electrical connection arrangement and the intended trajectory the first or the second medium may be filled firstly into the cavity. To create local uplift and downforce regions along the longitudinal extension of the cladding tube the first and second (or vice versa) media may be filled after another into the cavity.

The filling of the cavity with the second medium may be done from the floating offshore structure, for example by use of a pump unit and/or a compressor that is used to feed the second medium into the cavity. As another option, the second medium may be filled into the cavity by means of an underwater vehicle, for example a ROV.

In yet another embodiment the method may comprise step f) arranging at least one sealing plug in the cavity that seals an annular space between the outer cross section of the electrical cable and the inner cross section of the cladding tube, so that the at least one sealing plug fluid-tightly separates the cavity into a first portion and a second portion, wherein the first and second portions are filled with different media.

Step f) may be in particular executed after step d) but before step e). Additionally, step f) may be executed before step d). Yet additionally step f) may be executed once more after step e). This is to say, step f) may be executed multiple times so that multiple sealing plugs may be inserted into the cavity. It can be beneficial to insert a sealing plug into the cavity each time before filling a (different) medium into the cavity so that the media remain separate in the cavity. A fluidic separation of the longitudinal sections of the cavity filled with different media is particularly important for an intermediate portion of the trajectory extending essentially horizontally to avoid unintended mixing of different media or generally a dislocation of the media.

The sealing plug(s) may be inserted into the cavity from an open end of the cladding tube, in particular at the floating offshore structure. The sealing plug(s) may be moved along a longitudinal extension of the cavity by means of an overpressure applied at the open end of the cladding tube. In particular the sealing plug(s) may be "pumped forward" as the media are filled into the cavity.

In yet a further embodiment the method may comprise step g) filling the cavity is at least partly with a third medium having a different density than the first medium and the second medium, wherein in particular the third medium is water, in particular sea water.

Step g) may be in particular executed after step e). However any other order is possible as well - depending on the designed uplift/downforce properties of the underwater electrical connection arrangement and the intended trajectory.

To achieve the characteristic trajectory comprising a compensation portion having a lying S-shape with respect to the direction of gravity in the intended state of use, wherein the lying S-shape formed by first and the second bends, the media may be filled from the offshore platform to the cavity. Initially the first media is filled into the cavity in step d) to create the first bend towards the seabed (local maximum of the trajectory), then the second medium is filled into the cavity in step e) to create the second bend away from the seabed (local minimum of the trajectory) and then optionally the third medium may be filled into the cavity.

Any embodiment of the first aspect may be combined with any embodiment of the second and/or third aspect to obtain another embodiment of the first aspect and vice versa.

The embodiments and features described with reference to the apparatuses of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic view of a first embodiment of the underwater electrical connection arrangement according to the invention in its installed position at a floating wind turbine; and
Fig. 2 shows a schematic view of a second embodiment of the underwater electrical connection arrangement according to the invention in its installed position at a floating wind turbine; and
Fig. 3 shows a schematic view of a third embodiment of the underwater electrical connection arrangement according to the invention in its installed position at a floating wind turbine; and
Fig. 4 shows a schematic view of a fourth embodiment of the underwater electrical connection arrangement according to the invention in its installed position at a floating wind turbine; and
Fig. 5 shows a schematic view of a fifth embodiment of the underwater electrical connection arrangement according to the invention in its installed position at a floating wind turbine; and
Fig. 6 shows a detail of any of the second to fifth embodiment of the underwater electrical connection arrangement according to the invention in its installed position at a floating wind turbine; and
Fig. 7 shows a schematic view of a sixth embodiment of the underwater electrical connection arrangement according to the invention in its installed position at a floating wind turbine; and
Fig. 8 shows a schematic view of a seventh embodiment of the underwater electrical connection arrangement according to the invention in its installed position at a floating wind turbine; and
Fig. 9 shows a schematic view of a eighth embodiment of the underwater electrical connection arrangement according to the invention in its installed position at a floating wind turbine; and
Fig. 10 shows an isometric view of a portion of the cladding tube and pipe of the underwater electrical connection arrangement according to the invention with a sealing plug; and
Fig. 11 shows a schematic view of a ninth embodiment of the underwater electrical connection arrangement according to the invention in its installed position at a floating wind turbine; and
Fig. 12 shows a flow chart of a first embodiment of the method according to the invention; and
Fig. 13 shows a flow chart of a second embodiment of the method according to the invention; and
Fig. 14 shows a flow chart of a third embodiment of the method according to the invention; and
Fig. 15 shows a flow chart of a fourth embodiment of the method according to the invention.

In the Figures, like reference numerals designate like or functionally equivalent elements, unless otherwise indicated.

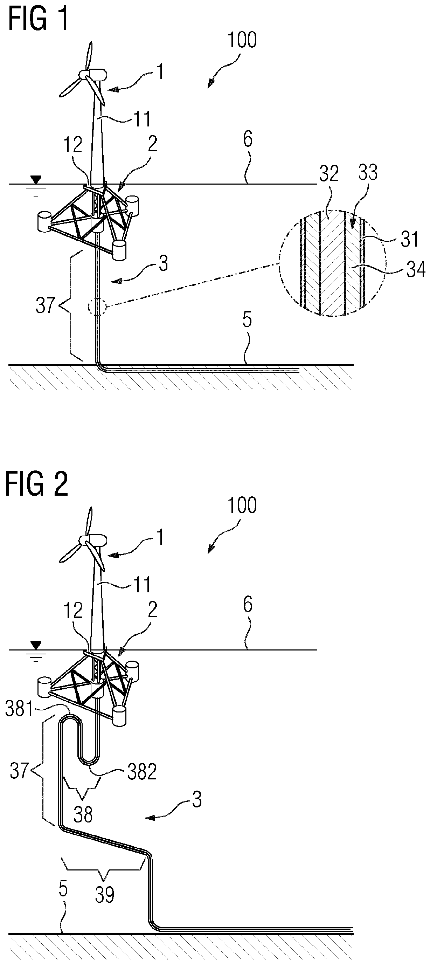

The floating offshore structure 100 of Fig. 1 comprises a floating foundation 2 with at least one buoyancy body that can in particular be of the tension leg platform (TLP) type but could comprise any other types of floating foundations as well. On the floating foundation 2 a tower 11 of a wind turbine 1 is mounted. The invention is however not limited to wind turbine applications but may be used for other offshore structures like floating electrical switchgear or floating drilling rigs as well.

The floating foundation respectively the buoyancy body 2 floats on water and is at least partly submerged below the sea level 6.

The tower 11 of the wind turbine 1 is attached to the floating foundation 2 at a so called transition piece 12 at the base of the tower 11.

From the floating foundation 2 an underwater electrical connection arrangement 3 extends down towards the seabed 5. At the seabed 5 the underwater electrical connection arrangement 3 may rest on the seabed or maybe buried in the soil of the seabed 5. The underwater electrical connection arrangement 3 may comprise both power and communication lines that connect the wind turbine 1 - for example - to other wind turbines of a wind farm, an offshore substation or switchgear and/or an onshore station.

The underwater electrical connection arrangement 3 comprises at least one electrical cable 32 and a water tight cladding tube 31 in that the electrical cable 32 is received. The cladding tube 31 is fixed to the floating offshore structure 100, in particular to the transition piece 12, and follows a trajectory or path from the floating offshore structure 100 towards the seabed 5 so that the cladding tube is immersed in water, in particular sea water, along a major share of its longitudinal extension. An inner cross section of the cladding tube 31 is larger than an outer cross section of the electrical cable 32 so that a cavity 33 remains inside the cladding tube 31. The cavity 33 is at least partly filled with a first medium 34 having a lower density than the water, in particular sea water, in that the cladding tube 31 is immersed so that an at least local uplift force is created. The cavity 33 may be filled along at least a first longitudinal section with the first medium 34.

The first medium 34 may comprise - for example - a gas, in particular an inflammable gas, in particular air, nitrogen, carbon dioxide, a noble gas or a mixture thereof. In other embodiments certain liquids and/or solids may be used as well.

The trajectory or path along that the cladding tube 31 with the electrical cable 32 arranged therein extends towards the seabed 5 comprises at least one riser portion 37 extending with a vertical component or essentially vertical. In the riser portion 37 the cavity 33 is at least partly or even completely filled with the first medium 34 so that a significant uplift forces may be created.

Down at the seabed 5 the trajectory or path or path comprises a support portion in that the cladding tube 31 rests on the seabed 5. In the support portion no uplift is required so that in the support portion the cavity 33 may not be filled with the first medium.

The underwater electrical connection arrangement 3 creates its own uplift/buoyancy without the need for separate, in particular external, buoyancy bodies attached to the cable, which drastically simplifies the installation at a floating offshore facility and renders the underwater electrical connection arrangement 3 more robust as the influence of sea's currents on the cable is minimized due to the omission of separate buoyancy bodies (the cladding tube has a lower flow resistance than voluminous buoyancy bodies). In addition, the amount of uplift/buoyancy can be easily adjusted by controlling the amount of first medium 34 that is provided to the cavity 33: The more first media 34, the longer the axial extension of the filled first longitudinal section, the higher the uplift forces. An adjustment is even possible after installation of the underwater electrical connection arrangement 3 at an offshore facility.

The physical principle behind the underwater electrical connection arrangement's 3 self-buoyancy is that by providing the first medium 34 to the cavity 33 it is possible to adjust a volume average mean density of the cladding tube/electrical cable assembly in such way that the mean density is lower (or equal) than the density of the surrounding sea water.

In the embodiment of **Fig. 2** the trajectory of the underwater electrical connection arrangement 3 comprises an intermediate portion 39 extending with a horizontal component, wherein along the intermediate portion 39 the cavity 33 is at least partly filled with the first medium 34. The intermediate portion 39 may comprise an acute angle, e.g. 2-15°, against the seabed 5 but may - in other embodiments - extend horizontally as well. The intermediate portion 39 is provided significantly below the sea level 6, preferably below the influence of shipping, and may be - for example - provided half way down to the seabed 5. Along the intermediate portion 39 the cavity 33 provides a high volume filled with the relative low density first medium 34 and may create significant uplift. A volume average mean density of the cladding tube/electrical cable assembly may be adjusted in the intermediate portion 39 by the amount of first medium 34 provided in the cavity 33 so that the mean density may equal the density of the surrounding sea water or may be slightly lower.

In addition, the trajectory of the underwater electrical connection arrangement 3 comprises a compensation portion 38 with a first bend 381 in that the cladding tube 31 is bent with respect to the riser portion 37 and with a second bend 382 neighboring the first bend 381, wherein the second bend 382 has a different bending direction than the first bend 381.

The first bend 381 is bent towards the seabed 5 and the second bend 382 is bent away from the seabed 5 so that the compensation portion has a lying S-shape with respect to the direction of gravity.

The bending angle of the first and/or second bend(s) may be between 30 and 100°, in particular around 90°. A bending radius of the first and/or second bend(s) may range between 3 to 8 m, in particular around 5 m. A vertical extension of the lying S-shape of the compensation portion may range from 15 to 25 m.

The lying S-shape of the compensation portion 38 provides an excess length of the cladding tube/electrical cable assembly that allows the floating foundation 2 to move freely - for example up to 50 m in each direction. The longitudinal oversize can be further helpful when repairs to a broken cable become necessary.

Along the compensation portion 38 the cavity 33 may be filled at least partly with the first and/or the second medium.

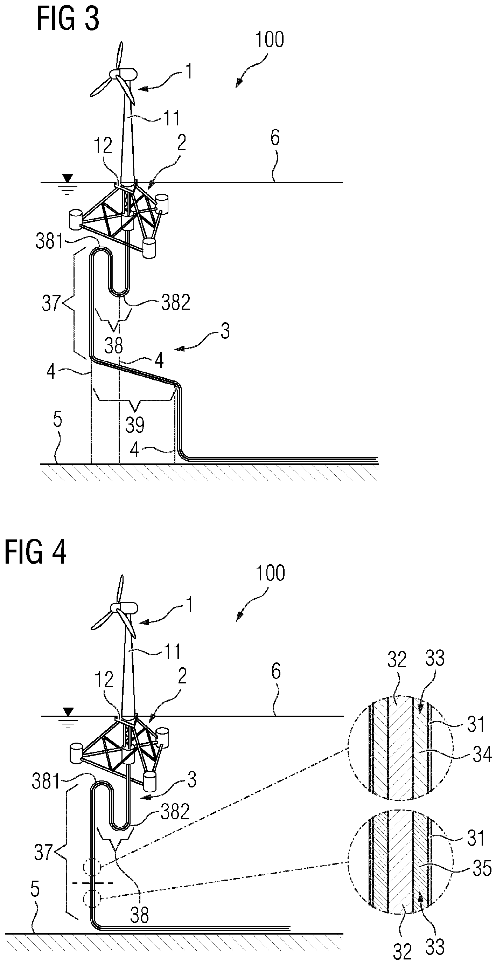

The embodiment of **Fig. 3** is very similar to the embodiment of Fig. 2 and only differentiates by multiple mooring lines 4 attached to the cladding tube 31 of the underwater electrical connection arrangement 3 to hold its trajectory/path stationary. The mooring lines 4 may be in particular attached to the cladding tube 31 in the intermediate portion 39 and/or the compensation portion 38.

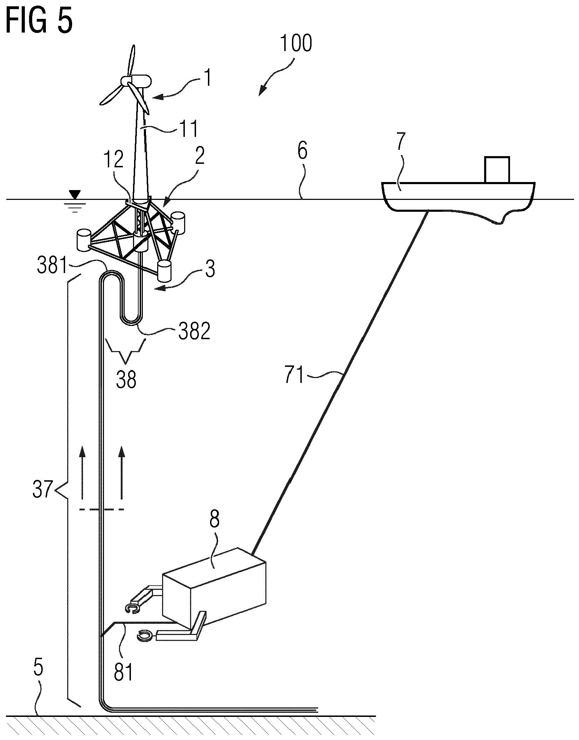

In the embodiments of **Fig. 4** and **Fig. 5** the underwater electrical connection arrangement 3 comprises a compensation portion 38 that is similar to the compensation portion 38 of the embodiment of Figs. 2 and 3. The difference over the embodiments of the preceding Figures is that in the riser portion 37 the cavity 33 is partly filled with the first medium 34 and partly with a second medium 35. A first longitudinal section of the cavity 33, that is an upper section with respect to the direction of gravity, is filled with the first medium 34 whereas a second longitudinal section of the cavity 33, that is a lower section with respect to the direction of gravity, is filled with the second medium 35. A separation line between the two longitudinal sections of the cavity 33 filled with different media 34,35 is illustrated with a dotted line. The second medium 35 has a different density than the first medium 34, wherein in particular the second medium 35 has a higher density than the surrounding sea water, so that a local downforce is created along the lower longitudinal section of the riser portion 37. The second medium 45 may in particular comprise a solid, in particular grout, in particular dynamic grout. In other embodiments certain liquids with a higher relative density than sea water and/or other solids may be used as well. By filling the cavity 33 along the riser portion 37 only in its upper longitudinal section with the first medium 34 having a lower density than the surrounding sea water the uplift is only created where it is technically beneficial, whereas in the lower longitudinal section of the riser portion 37 a local downforce is created that holds the cladding tube/electrical cable assembly at the seabed 5.

To adjust the level of uplift and/or downforce created by the cavity 33 filled with different media 34,35 it may be possible to adjust the respective filling levels, even in the installed state of the underwater electrical connection arrangement 3. An example for this in-situ adjustment of the filling levels is shown in **Fig. 5****.** The cladding 31 tube may be provided with at least one valve that allows fluidic access to the cavity 33 from external. Through this valve first and/or second media 34,35 may be added and/or removed from the cavity 33. This can be in particular done by means of a remotely operated underwater vehicle (ROV) 8 that may be operated from a supply vessel 7. The ROV 8 might be connected to the supply vessel 7 by a connection line. The ROV 8 can have a media line that is connectable to the valve in order to add and/or remove first and/or second and/or further media to and/or from the cavity 33. The supply vessel 7 may comprise a dynamic positioning system, for example a DP2 or DP3 system.

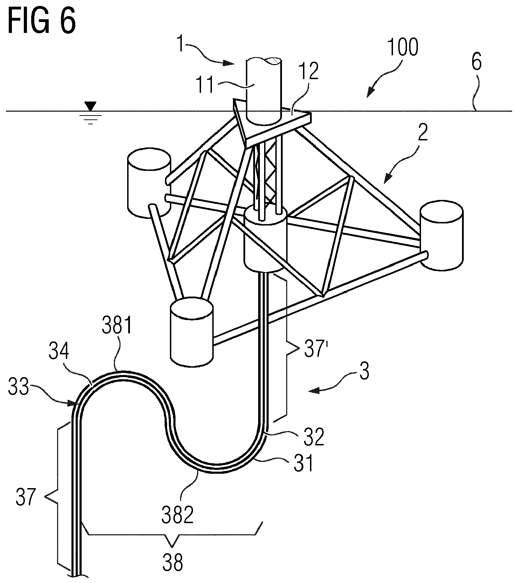

In **Fig. 6** the compensation portion 38 of the underwater electrical connection arrangements 3 of the embodiments of any of the Figs. 2-5 is shown in detail.

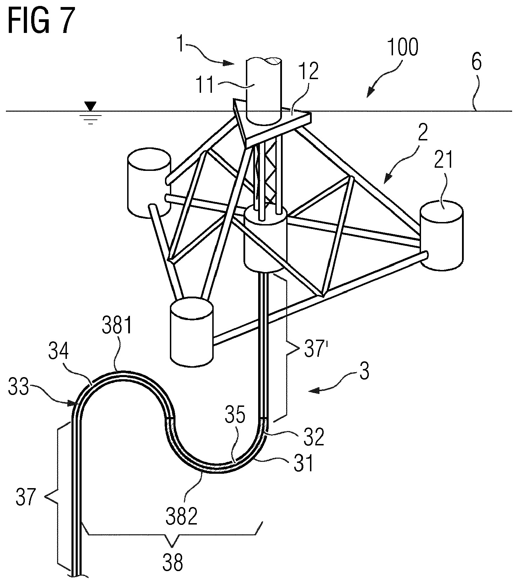

According to the embodiment of **Fig. 7** the cavity 33 along the second bend 382 of the compensation portion 38 can be filled with the second medium 35 having a higher density than the surrounding sea water. The second medium 35 in particular can be grout, especially dynamic grout. The second bend 382 defines a local minimum of the trajectory, wherein the second medium 35 creates a local downforce along the second bend 382 and helps to create and keep this local minimum stable when immersed in sea water.

Along the first bend 381 the cavity 33 is however filled with the first medium 34 having a lower density than the surrounding sea water. The first medium 34 in particular can be air. The first bend 381 defines a local maximum of the trajectory, wherein the first medium 34 creates a local uplift along the second bend and helps to create and keep this local maximum stable when immersed in sea.

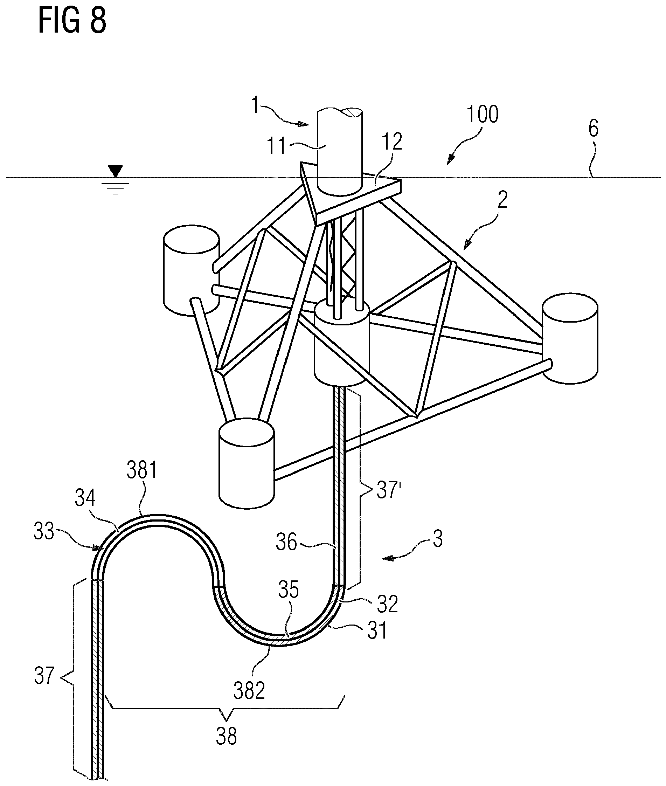

According to **Fig. 8** the cavity 33 along the riser portion 37 can be filled with a third medium 36 at least in a longitudinal section neighboring the first bend 381 of the compensation portion 38. The third medium 36 can in particular be water, which may have a different salinity than the surrounding sea water. By adapting the salinity of the water forming the third medium 36 in the riser portion 37 an uplift or a downforce may be created. The third medium 36 however might also comprise the same water as the surrounding sea water. Further, a second riser portion 37' extending between the second bend 382 and the transition piece 12 of the floating offshore structure 100 may be filled with the third medium 36 as well.

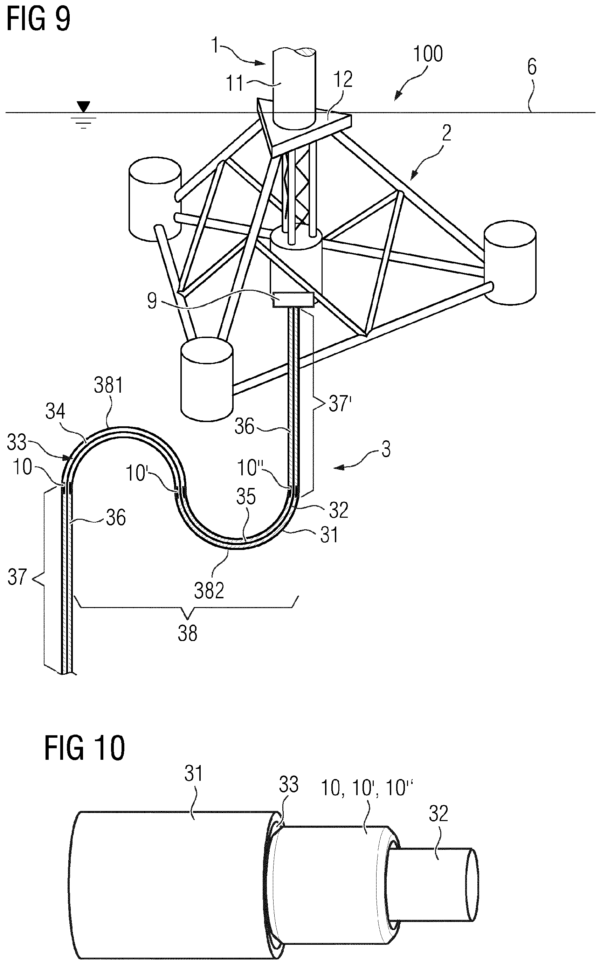

According to **Fig. 9** several sealing plugs 10,10',10" may be arranged within the cavity 33 that separate the longitudinal sections of the cavity 33 filled with different media 34,36,36 from each other. A first sealing plug 10 separates the longitudinal section of the riser portion 37 filled with the third medium 36 from the first bend 381 filled with the first medium 34. A second sealing plug 10' separates the first bend 381 filled with the first medium 34 from the second bend 382 filled with the second medium 35 while a third sealing plug 10'' separates the second bend 382 filled with the second medium 35 from the second riser portion 37' filled with the third medium. The sealing plugs 10,10',10" fluid-tightly seal an annular space between the outer cross section of the electrical cable 32 and the inner cross section of the cladding tube 31. The sealing plugs 10,10',10" ensure that the different media 34,35,36 do not mix so that the designed uplift/downforce sections stay where they are intended to be located.

The first, second and/or third media 34,35,36 may be filled into the cavity 33 from the floating offshore structure 100, for example by use of a pump unit 9, that is used to feed the media 34,35,36 into the cavity 33. The sealing plug(s) 10,10',10" ' may be inserted into the cavity 33 from an open end of the cladding tube 31 at the floating offshore structure 100 as well. The sealing plug(s) 10,10',10" can be moved along a longitudinal extension of the cavity 33 by means of the overpressure created by the pump unit 9 so that they are moved forward together with the media 34,35,36.

For example, the installation of the underwater electrical connection arrangement 3 of Fig. 9 may be done as follows from the offshore structure 100. Firstly, the first sealing plug 10 is inserted to the cavity 33 that may be filled with sea water prior to installation. Then the first media 34 is pumped to the cavity 33 to create the first bend 381 of the compensation portion 38 while moving the first sealing plug 10 along the longitudinal extension of the cavity 33. Then, the second sealing plug 10' is inserted into the cavity 33 before pumping the second medium 35 into the cavity 33 to create the second bend 382 of the compensation portion 38 while moving the first and the second sealing plug 10,10' as well as the first medium 34 along the longitudinal extension of the cavity 33. Then, the third sealing plug 10'' is inserted into the cavity 33 before pumping the third medium 36 into the cavity 33 that may be present in the second riser portion 37'.

The assembly of cladding tube 31, electrical cable 32 and sealing plug 10,10',10" is shown in **Fig. 10** in an exploded isometric view. By application of a pressure differential between the sides of the cavity 33 being separated by the sealing plug 10,10',10'' acting as a "piston" the sealing plug 10,10',10" may be moved forward along the extension of the cavity 33.

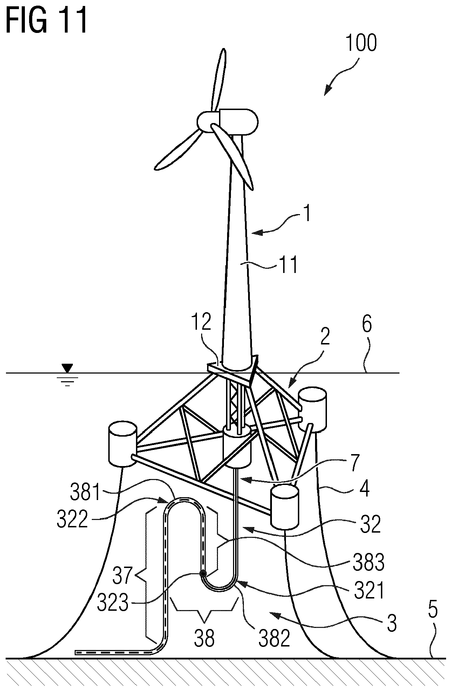

The embodiment of **Fig. 11** is similar to the preceding embodiments and incorporates a compensation portion 38 as well. In order to avoid redundancies, only the differences will be discussed in the following. The trajectory of the underwater electrical connection arrangement 3 comprises a straight section 383 between the two bends 381,382 of the compensation portion 38 that connects the first bend 381 with the second bend 382. Said straight section 383 may in particular extend with a vertical component, in particular essentially vertically, with respect to the direction of gravity.

Further, in the embodiment of Fig. 11 the underwater electrical connection arrangement 3 comprises two different types of electrical cables 32, a cable of the static type 322 and a cable of the dynamic type 321, that are connected together at a connection point 323. More specifically, a section of the cable 32 that is close to the floating foundation 2 is of the dynamic type 321 and a section of the cable 32 remote from the floating foundation 2 is of the static type 322. The connection point 323 may be provided within the cladding tube 31. The connection point 323 can - for example - be located in the compensation portion 38 of the trajectory but may - in other embodiments - be located in a riser portion 37,37' or other portions, such as the support portion on the seabed, as well.

Moreover, the floating offshore structure 100 of the embodiment of Fig. 11 is secured to the seabed 5 by means of several mooring lines.

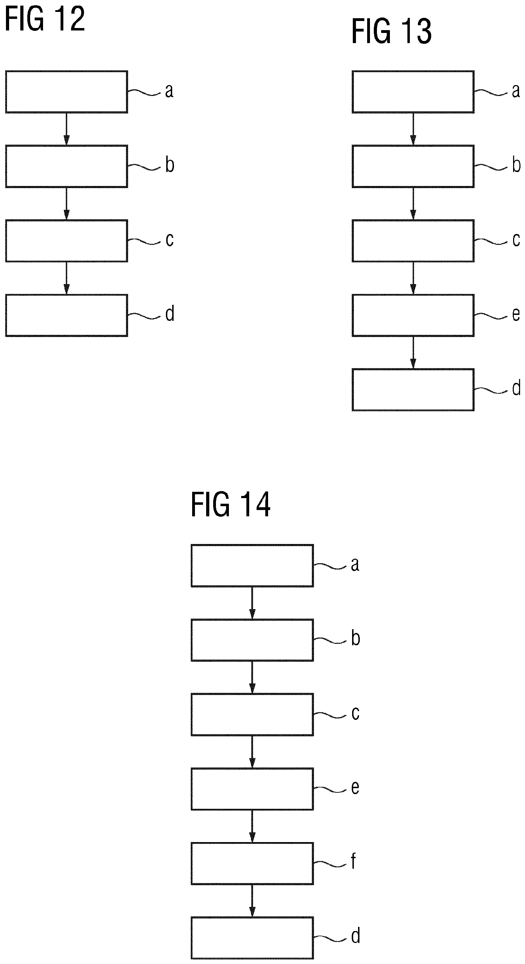

**Fig. 12** shows a flow chart of a first embodiment of the method for installation of an underwater electrical connection arrangement 3 to a floating offshore structure 100, in particular a floating wind turbine 1, a floating electrical switchgear or a floating drilling rig, and comprises the steps:
a) fixing the cladding tube 31 directly or indirectly to a buoyancy body 2 of the floating offshore structure 100,
b) at least partly immersing the cladding tube 31 in water, in particular sea water, so that it follows a trajectory from the floating offshore structure 100 towards a seabed 5,
c) inserting the electrical cable 32 into the cladding tube 31,
d) filling the cavity 33 at least partly with a first medium 34 having a lower density than the water, in particular sea water, in that the cladding tube 31 is immersed, so that an at least local uplift force is created.

According to a second embodiment, that is illustrated in the flow chart of **Fig. 13****,** the method additionally comprises step e) filling the cavity 33 at least partly with a second medium 35 having a different density than the first medium 34, wherein in particular the second medium 35 has a higher density than the water, in particular sea water, in that the cladding tube 31 is immersed, so that, a local downforce is created. Herein, step e) is executed prior to the execution of step d) so that the relatively high density second media can be arranged in a lower section of the cavity with regards to a direction of gravity when the filling is performed from the floating offshore structure. When the filling is done from a different location - for example from onshore - step d) may however be executed before step e).

According to a third embodiment, that is illustrated in the flow chart of **Fig. 14****,** the method additionally comprises step f) arranging at least one sealing plug 10,10',10" in the cavity 33 that seals an annular space between the outer cross section of the electrical cable 32 and the inner cross section of the cladding tube 31, so that the at least one sealing plug 10,10',10" fluid-tightly separates the cavity 33 into a first portion and a second portion, wherein the first and second portions are filled with different media 34,35,36.

Step f) is executed right after step e) so that the sealing plug 10,10',10'' can be moved along the cavity together with the first medium 34 that is filled in step d).

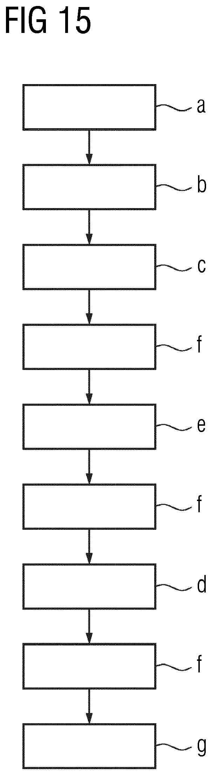

Finally, according to a fourth embodiment of the method, that is illustrated in the flow chart of **Fig. 15****,** step f) is additionally executed before step e) and after step e), so that altogether three sealing plugs 10,10',10" are arranged in the cavity 33. Further, the method of the fourth embodiment comprises step g) filling the cavity 33 at least partly with a third medium 36 having a different density than the first medium 34 and the second medium 35, wherein in particular the third medium 36 is water, in particular sea water.

Although the present invention has been described in accordance with preferred embodiments, it is obvious for the person skilled in the art that modifications are possible in all embodiments.

## Claims

1. Underwater electrical connection arrangement (3) for a floating offshore structure (100), in particular for a floating wind turbine (1), comprising at least one electrical cable (32) and a water tight cladding tube (31) in that the electrical cable (32) is received, wherein the cladding tube (31) is designated to be fixed to the floating offshore structure (100) and to follow a trajectory from the floating offshore structure (100) towards a seabed (5), wherein an inner cross section of the cladding tube (31) is larger than an outer cross section of the electrical cable (32) so that at least one cavity (33) remains inside the cladding tube (31), wherein the cladding tube (31) is designated to be at least partially immersed in water, in particular sea water, in an intended state of use of the underwater electrical connection arrangement (3),
**characterized in that**
the cavity (33) is at least partly filled with a first medium (34) having a lower density than the water, in particular sea water, **in that** the cladding tube (31) is immersed in the intended state of use, so that, in the intended state of use, an at least local uplift force is created.

2. Underwater electrical connection arrangement (3) according to claim 1, wherein the cavity (33) is at least partly filled with a second medium (35) having a different density than the first medium (34), wherein in particular the second medium (35) has a higher density than the water, in particular sea water, in that the cladding tube (31) is immersed in the intended state of use, so that, in the intended state of use, a local downforce is created.

3. Underwater electrical connection arrangement (3) according to claim 1 or 2, wherein the first medium (34) comprises
- a gas, in particular an inflammable gas, in particular air, nitrogen, carbon dioxide, a noble gas or a mixture thereof, or
- a liquid, in particular an environmentally neutral liquid, in particular water with a lower density than the water, in particular sea water, in that the cladding tube (31) is at least partly immersed in the intended state of use, an oil, in particular fish oil, sunflower oil, rapeseed oil, an alcohol, in particular glycol, or a mixture thereof, or
- a solid, in particular a foam, in particular a closed cell foam.

4. Underwater electrical connection arrangement (3) according to claim 2 or 3, wherein the second medium (45) comprises
- a solid, in particular grout, in particular dynamic grout, clay, concrete, ceramics or a mixture thereof, or
- a liquid, in particular an environmentally neutral liquid, in particular water with a higher density than the water, in particular sea water, in that the cladding tube is at least partly immersed in the intended state of use, or a liquid metal, in particular mercury, glycerin, or a mixture thereof.

5. Underwater electrical connection arrangement (3) according to any of the claims 2 to 4, comprising at least one sealing plug (10,10',10") arranged in the cavity (33), wherein the sealing plug (10,10',10") seals an annular space between the outer cross section of the electrical cable (32) and the inner cross section of the cladding tube (31), and wherein the at least one sealing plug (10,10',10") fluid-tightly separates the cavity (33) into a first portion and a second portion, wherein the first and second portions are filled with different media (34,35,36).

6. Underwater electrical connection arrangement (3) according to any of the preceding claims, wherein the trajectory comprises at least one riser portion (37) extending with a vertical component, wherein in particular in the riser portion (37) the cavity (33) is at least partly filled with the first (34) and/or the second medium (35).

7. Underwater electrical connection arrangement (3) according to any of the claims 2 - 6, wherein the second medium (35) is provided in a portion of the cavity (33) that corresponds to a local minimum of the trajectory with respect to the direction of gravity in the intended state of use.

8. Underwater electrical connection arrangement (3) according to any of the preceding claims, wherein the trajectory comprises an intermediate portion (39) extending with a horizontal component, wherein in particular the intermediate portion (39) is at least partly filled with the first medium (34).

9. Underwater electrical connection arrangement (3) according to any of the claims 6 - 8, wherein the trajectory comprises a compensation portion (38) having a first bend (381) in that the cladding tube (31) is bent with respect to the riser portion (37), wherein in particular the cavity (33) along the first bend (381) is filled with the first (34) or the second medium (35).

10. Underwater electrical connection arrangement (3) according to claim 9, wherein the compensation portion (38) comprises a second bend (382) neighboring the first bend (381), wherein the second bend (382) has a different bending direction than the first bend (381), wherein in particular the cavity along the second bend (382) is filled with a different medium (34,35,36) than along the first bend (381).

11. Underwater electrical connection arrangement (3) according to claim 10, wherein the compensation portion (38) has a lying S-shape with respect to the direction of gravity in the intended state of use, wherein the lying S-shape is in particular formed by the first bend (381) and the second bend (382) .

12. Floating offshore structure (100), in particular floating wind turbine (1), floating electrical switchgear or floating drilling rig, comprising at least one buoyancy body (2) and at least one electrical device directly or indirectly attached to the buoyancy body (2), wherein the electrical device is connected to an underwater electrical connection arrangement (3),
wherein the underwater electrical connection arrangement is an underwater electrical connection arrangement (3) according to any of the preceding claims and wherein the cladding tube (31) of the underwater electrical connection arrangement (3) is directly or indirectly fixed to the buoyancy body (2).

13. Method for installation of an underwater electrical connection arrangement (3) according to any of claims 1 - 11 to a floating offshore structure (100), in particular a floating wind turbine (1), a floating electrical switchgear or a floating drilling rig, comprising the steps:
a) fixing the cladding tube (31) directly or indirectly to a buoyancy body (2) of the floating offshore structure (100),
b) at least partly immersing the cladding tube (31) in water, in particular sea water, so that it follows a trajectory from the floating offshore structure (100) towards a seabed (5),
c) inserting the electrical cable (32) into the cladding tube (31),
d) filling the cavity (33) at least partly with a first medium (34) having a lower density than the water, in particular sea water, in that the cladding tube (31) is immersed, so that an at least local uplift force is created.

14. Method according to claim 13,
comprising step
e) filling the cavity (33) at least partly with a second medium (35) having a different density than the first medium (34), wherein in particular the second medium (35) has a higher density than the water, in particular sea water, in that the cladding tube (31) is immersed, so that, a local downforce is created.

15. Method according to claim 13 or 14,
comprising step
f) arranging at least one sealing plug (10,10',10") in the cavity (33) that seals an annular space between the outer cross section of the electrical cable (32) and the inner cross section of the cladding tube (31), so that the at least one sealing plug (10,10',10") fluid-tightly separates the cavity (33) into a first portion and a second portion, wherein the first and second portions are filled with different media (34,35,36).
